# EUROPEAN PATENT SPECIFICATION

(11) **EP 3 543 585 B1**
(45) Date of publication and mention of the grant of the patent: **25.10.2023**
(21) Application number: 18175574.5
(22) Date of filing: 01.06.2018
(51) Int. Cl.: F16L 55/46, F16L 55/28, G03B 37/00, F16L 101/30

(54) **DEVICE AND METHOD FOR ACCESSING A PIPE THAT BRANCHES FROM A LARGER DIAMETER PIPE AT AN ANGLE.**
VORRICHTUNG UND VERFAHREN ZUM ZUGANG ZU EINER ROHRLEITUNG, DIE AUS EINER GRÖSSEREN DURCHMESSERROHR AN EINEM WINKEL VERZWEIGT.
DISPOSITIF ET PROCEDE PERMETTANT L'ACCES A UN TUYAU DEPUIS UN TUYAU DE PLUS GRAND DIAMETRE AVEC UN ANGLE.

(30) Priority: 20.03.2018 GB 201804435
(43) Date of publication of application: 25.09.2019
(73) Proprietor: Pass Technology Ltd, Birkenhead, Merseyside CH41 8FA (GB)
(72) Inventor: Fitzpatrick, Kevin, Birkenhead, Merseyside CH41 8FA (GB)
(74) Representative: Bartle Read

(56) References cited:
- WO-A1-94/13998
- US-A- 6 085 794
- US-B2- 8 733 187

## Description

The present invention relates to a device for accessing and/or inspecting and/or delivering a fluid to a conduit and a method using the same. More particularly, the present invention relates to a device and method for accessing and/or inspecting and/or delivering a fluid to a pipe that branches from a larger diameter pipe at an angle.

### BACKGROUND OF THE INVENTION

Many industries are reliant on moving gases and fluids through pipework systems some of which due to process parameters are difficult to clean, test, inspect and/or repair. One approach to solve this problem has been to cut into the pipe to perform the necessary cleaning, testing, or repair. This practice, however, is expensive to perform and takes a facility offline for a relatively long time.

WO 94/13998 A1 discloses a means of providing a lateral connection pipe, which intersects a main pipe at an angle, with a lining tube, the means comprising an elongated sealing collar.

US 8 733 187 B2 discloses a pipe inspection tool having a number of cameras mounted on a head piece having a tubular body defining a central axis and having a proximal opening at a first end and a distal opening perpendicular to the central axis.

Known tools are unable to operate under high pressure and thus unable to deliver, for example, cleaning fluids or the like.

### SUMMARY OF THE INVENTION

In accordance with a first aspect of the present invention there is provided a device as claimed in claim 1.

The device may be used for access to a header pipe having a feeder tube extending from the header pipe. The second opening may be configured to engage the feeder tube at an interior surface of the header pipe.

The plate of the seal member comprises a convex exterior surface that is shaped to conform to the inner surface of a header pipe to ensure a fluid seal and mechanical coupling and to assist in maintaining a fluid seal even when fluid is delivered under high pressure.

The device of the present invention is capable of delivering fluid at pressures up to 85 bar (8.5 MPa).

The device may comprise a seal member having a dimension that is at least a quarter of the length of the device.

The device may include one or more displacement members that comprise a telescopically extending leg.

The device may also include a camera and/or another sensing device.

In accordance with a further aspect, not in accordance with the present invention, there is provided a device for a header pipe having a feeder tube extending from the header pipe, the device comprising:
a head piece having a tubular body defining a central axis and having a proximal opening at a first end and a distal opening at an angle to the central axis;
the distal opening being configured to engage the feeder tube at an interior surface of the header pipe; and
a camera mounted to the head piece and configured to provide a field of view from a position from within the head piece looking outward through the distal opening, the field of view further being centered within the distal opening to facilitate alignment of the feeder tube coupler with the feeder tube; and
a jack coupled to the head piece and configured to press the head piece against the interior surface of the header tube to create a pressure seal and mechanically couple the head piece with the feeder tube.

The device may also include a camera and/or another sensing device mounted to the head piece and configured to provide a field of view from a position from within the head piece looking outward through the distal opening. The field of view is centered within the distal opening to facilitate alignment of the feeder tube coupler with the feeder tube.

The device may also have one or more jacks and configured to press the seal member against the interior surface of the header tube thus making a seal at the couple of the second opening with the feeder tube.

In accordance with a further aspect, not in accordance with the present invention, there is provided a method of delivering fluid to a pipe using the device as described hereinabove.

Preferred and alternative examples of the present invention are described in detail below with reference to the following drawings:
FIG. 1 Depicts a device in accordance with the present invention in position relative to a header pipe and feeder tubes to be accessed by the access device according to embodiments of the present disclosure;
FIG. 2 Illustrates a device in accordance with the present invention having a head piece, a delivery tube, and an adapter pipe, according to embodiment of the present invention;
FIG. 3 Is an exploded view of the device head piece of FIGS. 1 and 2 according to embodiments of the present disclosure; and
FIG. 4 Is a top plan view of the head piece of a device according to embodiments of the present disclosure.

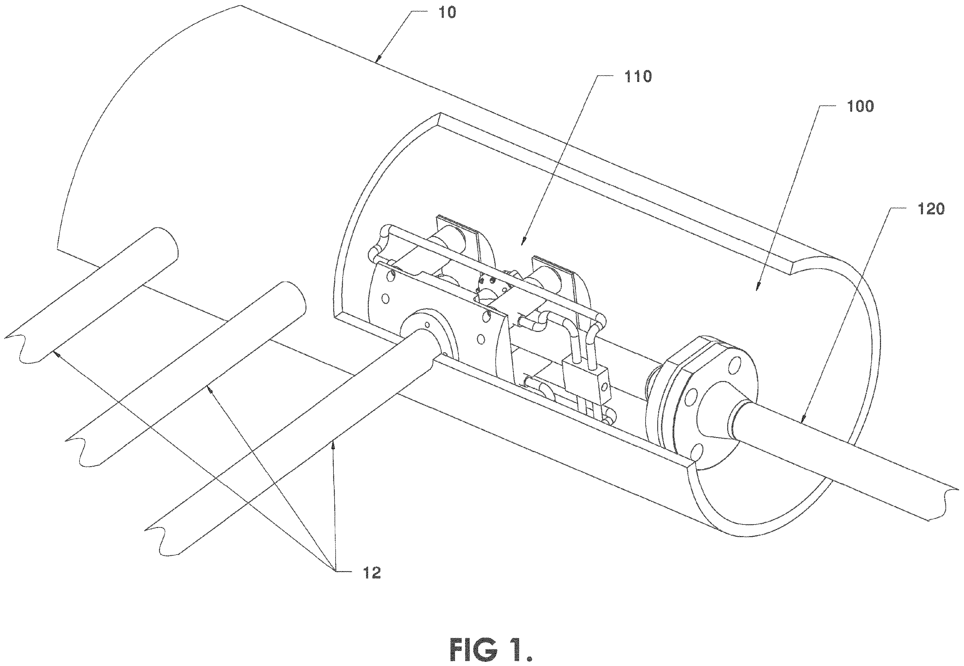

FIG. 1 illustrates a device 100 according to embodiments of the present disclosure. The device 100 includes a head piece 110 and a delivery tube 120. The access system 100 is used to access the interior of a header pipe 10 having feeder tubes 12 extending from the header pipe 10 at an angle. In general, the feeder tubes 12 have a smaller diameterthan the header pipe 10. The systems and methods of the present disclosure can be used in a variety of environments involving pipes of different diameter, some of which are commonly referred to as header pipes and feeder tubes, and some of which are not necessarily referred to as such. For purposes of clarity and brevity, the terms "header pipe" and "feeder tube" are used to refer to a large diameter pipe and a small diameter pipe, respectively without loss of generality. The feeder tubes 12 can extend from the header pipe 10 at virtually any angle; in the embodiment, the angle is approximately 90°. The pipe access system 100 can be introduced to the header pipe 10 and aligned with the feeder tube 12. The head piece 110 is then pressed against the interior surface of the header pipe 10 with a hydraulic or mechanical jack to form a seal with the feeder tube 12. Cleaning and testing equipment and processes can be delivered through the delivery tube 120, through the head piece 110, and into the feeder tube 12. Cleaning and testing equipment may be, but are not restricted to Water Blasting lances and hoses, mechanical cleaning pigs, and hydrostatic or vacuum pressure testing.

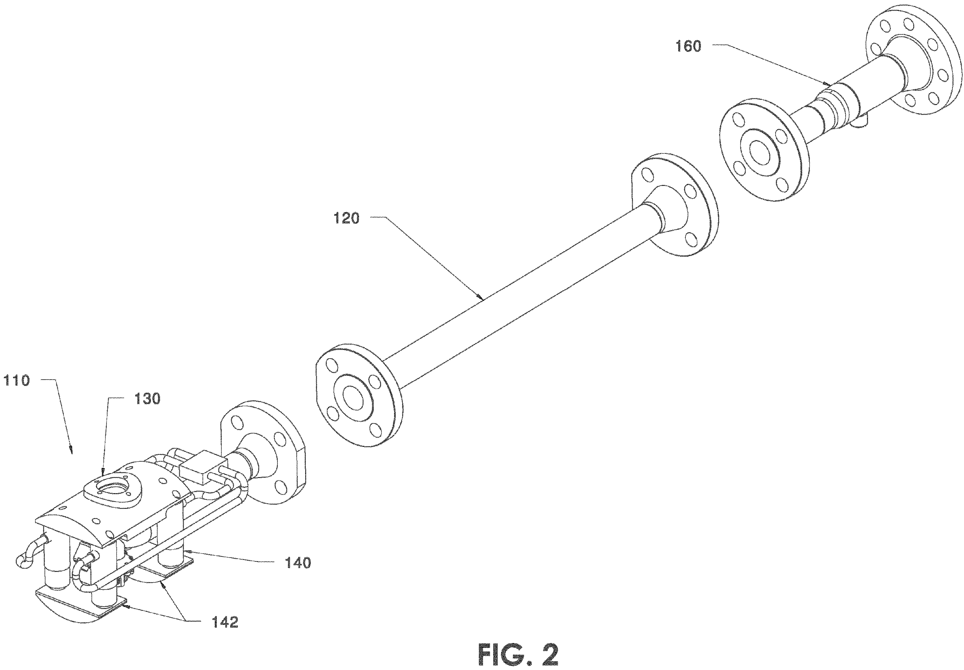

FIG. 2 illustrates a device 100 according to embodiments of the present disclosure, including a head piece 110 and a delivery tube 120. The head piece 110 includes a tube coupler 130 on a side of the head piece 110. The head piece 110 can have a longitudinal axis parallel with the delivery tube 120, and the tube coupler 130 can be oriented at an angle relative to the longitudinal axis of the head piece 110, such as a 90° angle. The tube coupler 130 is shaped to conform to an interior surface of the header pipe 10 shown in FIG. 1. The tube coupler 130 has a curved surface configured to conform to a curved surface such as the inner surface of the header pipe 10. In other embodiments the tube coupler 130 can have a curved shape of a different radius, depending on the shape of the surface to which the tube coupler 130 is to engage.

The tube coupler 130 is made of a resilient member to facilitate forming a seal.

The tube coupler 130 is a resilient gasket configured to form a seal between the head piece 110 and an opening of a feeder tube 12 within the header pipe 10.

The head piece 110 can also include a jack 140 configured to press the tube coupler 130 against the interior surface of the header pipe 10. The jack 140 can include bumpers 142 shaped to engage the interior surface of the header pipe 10 opposite the tube coupler 130. In embodiments in which the access system 100 is for use within a cylindrical header pipe 10, the radius of the bumper 142 and the tube coupler 130 can be the same. In other embodiments the bumpers 142 and the tube coupler 130 can be designed to engage with structures having disparate shapes and surface characteristics and can therefore be modified accordingly.

The feeder tubes 12 may be located at any distance from an access point in the larger header pipe 10. Accordingly, the delivery tube 120 may be made to be variable in length, accommodating a number of segments coupled together to form the delivery tube. In addition, the delivery tube 120 may attach to the head piece 110 in a location that leaves the delivery tube positioned centrally within the header pipe 10.

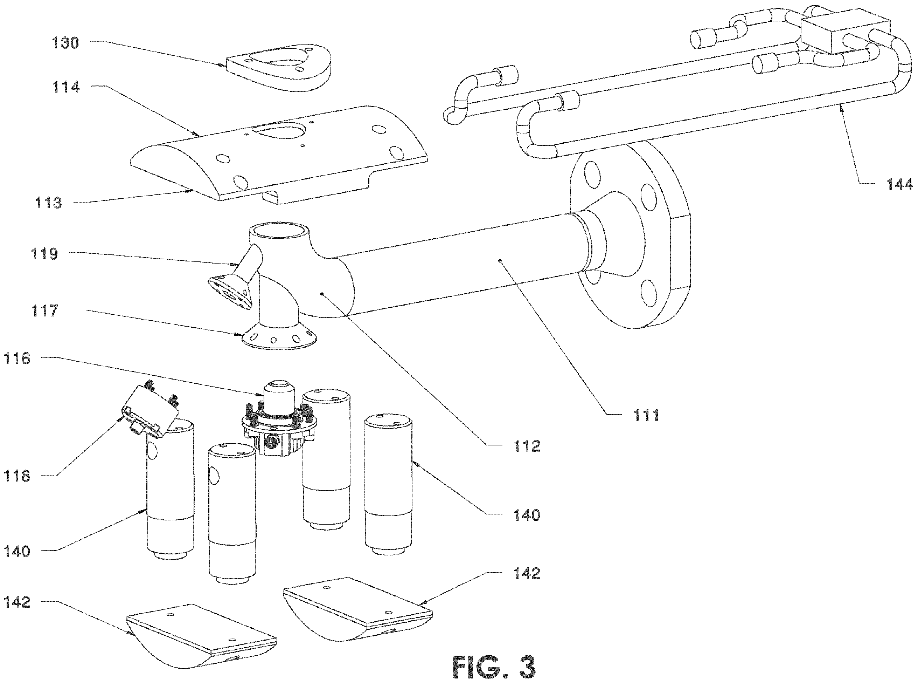

FIG. 3 is an exploded view of the head piece 110 of the device 100 according to embodiments of the present disclosure. The head piece 110 can be made of a first pipe section 111 that is oriented generally parallel with the central longitudinal axis of the head piece 110. As shown, the first pipe section 111 is cylindrical in shape and therefore the longitudinal axis extends through the center of the cylinder. The first pipe section 111 can be coupled to a second pipe section 112. The first and second pipe sections may be integrally formed as one continuous tube, or may be formed as separate sections joined together. In either case, the first pipe section includes a first, proximal opening at one end that is sized and configured to deliver cleaning, testing, or inspection equipment and services, as discussed below. Within the head piece 110, the internal channel forms an angle, preferably curved, to direct cleaning, inspection equipment or fluids from a first path of travel aligned with the longitudinal axis to a second path of travel angularly offset by the orientation of the second pipe section. The second pipe section forms a second, distal opening through which the equipment or fluids may travel, ultimately allowing it to enter a feeder tube.

The shape of the second pipe section 112 is chosen based on the angle at which the feeder tube 12 extends from the header pipe 10. In the embodiment shown, the angle is 90°, but virtually any other angle is possible. The second pipe section 112 can be an elbow junction. The head piece 110 also includes a third pipe section 113 that extends from the second pipe section 112 to accommodate the specific header pipe and feeder tube configuration. The third pipe section 113 is formed to integrate with the tube coupler 130 The third pipe section 113 has an elongate body. The third pipe section 113 and tube coupler 130 together form a seal member.

The feeder tube coupler 130 is shown coupled to the third pipe section 113. The feeder tube coupler 130 and the third pipe section 113 can be bolted, welded, or otherwise attached to the second pipe section 112. The fluid circuit for delivering equipment or fluids to the feeder tube 12 includes the first pipe section 111, the second pipe section 112, and the feeder tube coupler 130. If necessary, the circuit can also include a delivery tube 120, and a third pipe section 113. The third pipe section has a sealing member convex sealing face 114 shaped to conform to the inner face of a header pipe 10 and extending around the opening of a feeder tube 12 such that a pressure seal and mechanical couple is created to maintain fluids at high pressures. In the present embodiment the convex sealing face 114 of the third pipe section provides necessary stability for the forces produced by the jack elements to create and maintain a high pressure fluid seal that is otherwise not possible.

The head piece 110 can include a sensing device, such as a camera 116. In other embodiments the sensing device can be an ultrasound device or a mechanical sensing device, or any other suitable sensing device. The camera 116 can be oriented in any suitable direction to allow the operator to observe the interior of the header pipe 10 in order to align the feeder tube coupler 130 to the feeder tube 12. In some embodiments, the camera 116 can be placed at a center of the angled tube and oriented to look outwardly from the feeder tube coupler 130 to more easily align the feeder tube coupler 130 with the feeder tube 12. As best seen in FIG. 3, a camera 116 can be mounted through a channel 117 passing through a portion of the second pipe section 112. In this configuration, the camera 116 is mounted substantially flush with or recessed slightly below the interior sidewall of the first pipe section 111, oriented to view the image diametrically opposite and through the opening of the second pipe section 112 without significantly obstructing the path through the head piece 110.

The head piece can also contain a light 118 to provide illumination of the interior surface of the header pipe 10. The light 118 can be configured and oriented in any suitable direction, provided it illuminates the interior surface of the header pipe 10 sufficiently for the camera to return useable images. In this embodiment the light 118 is placed to provide illumination outwardly from inside the second pipe section 112. As seen in FIG. 3, a light 118 can be mounted though a channel 119 passing through a portion of the second pipe section 112. In this configuration, the light 118 is mounted substantially flush with or recessed slightly below the interior sidewall of the second pipe section 112, oriented to provide illumination through the opening of the second pipe section 112 without significantly obstructing the path through the head piece 110.

The head piece 110 includes one or more jacks 140 having bumpers 142 that engage the header pipe 10 opposite to the feeder tube coupler 130 to press the feeder tube coupler 130 and the sealing face 114 of the sealing plate to the interior surface of the header pipe 10 to create a pressure seal and mechanically couple the head piece 110 to the feeder tube 12. The head piece 110 can include hydraulic conduit 144 to supply hydraulic pressure to the jacks 140. In other embodiments hydraulic conduit may be configured as internal channels formed integral to the structure of the head piece 110. Hydraulic jacks are one example mechanism that can be used to achieve the necessary pressure to seal the feeder tube coupler 130 to the feeder tube 12. In other embodiments any fluid actuator which translates a fluid pressure into a linear motion can be used. In still other embodiments mechanical actuators which translate an electrical power signal into linear motion, or even hybrid actuators using both mechanical linkages in conjunction with fluid pressure to create linear motion, can be used.

There are many factors that determine how much force is necessary to create a proper seal to the feeder tube 12. In some embodiments, such as header/feeder pipes used by oil refineries, the fluid circuit pressure in the pipe access system can exceed 70 bar (7 MPa). In order to create an adequate seal to the feeder tube 12, the feeder tube coupler 130 must withstand the required fluid circuit pressure with an appropriate safety margin to create a seal adequate to provide safe reliable delivery of the cleaning equipment or service designated fluids and processes.

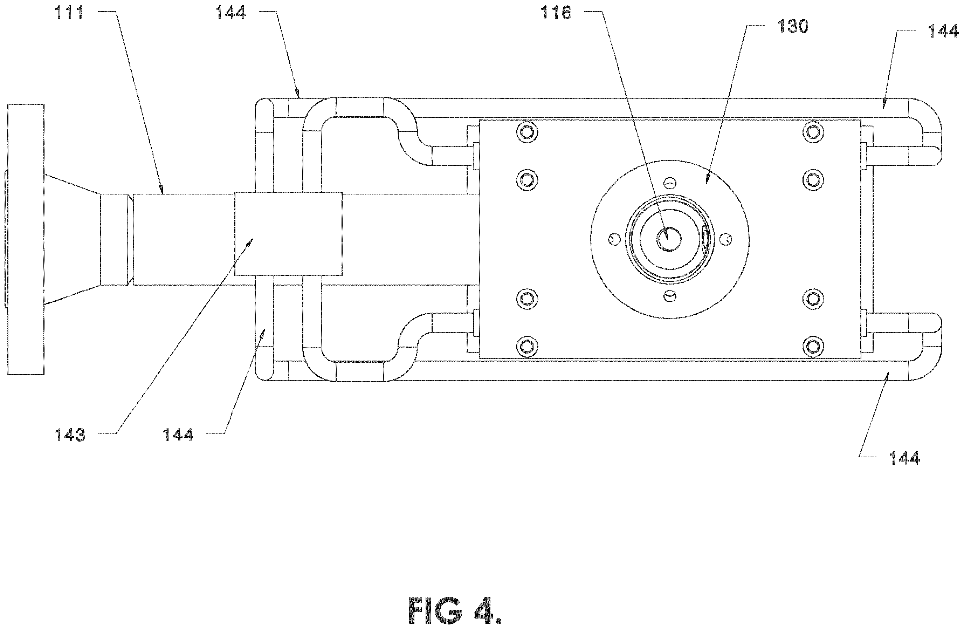

FIG. 4 is a top plan view of the head piece 110 according to embodiments of the present disclosure. In this embodiment, a camera 116 is positioned at the center of the second pipe section 112 and feeder tube coupler 130. Other camera positions are possible, and any suitable number of cameras can be used based on the particular needs of a given installation. FIG. 4 also shows the hydraulic conduit 144 for the jacks 140. The conduit can be connected to a manifold 143 to distribute the hydraulic pressure to the jacks 140. The hydraulic conduit and the manifold can be external and discrete or be internal channels formed into the structure of the head piece. The head piece 110 can have two jacks 140 positioned on either side of the feeder tube coupler 130 for a total of four jacks. In other embodiments, the head piece 110 can include a single jack 140 aligned with the feeder tube coupler 130 or offset therefrom. In still further embodiments, the head piece 110 can include five or more jacks 140.

While the preferred embodiment of the invention has been illustrated and described, as noted above, many changes can be made without departing from the cope of the invention, as defined by the appended claims.

For example, in place of cameras to position the head piece other telemetry equipment can be used, including sonar or a mechanical sensor. Also, the angle at which the feeder tube extends from the header pipe can be virtually any angle. The environment in which the access system of the present disclosure is used can be any environment having a pipe or other component that is difficult to access and where service and testing equipment and fluids cannot be delivered. Accordingly, the scope of the invention is not limited by the disclosure of the preferred embodiment. Instead, the invention should be determined entirely by reference to the claims that follow.

## Claims

1. A device (100) for delivering a fluid and/or inspecting and/or accessing a first conduit (12) having an opening that communicates with a larger second conduit (10), the device having a tubular body (111, 112) defining a central axis and having a first opening at a first end and a second opening at a second end, the second end being at an angle to the central axis, wherein the second opening is associated with a seal member (113, 130) capable of creating a fluid seal such that fluid can be delivered to the first conduit (12), **characterised in that** the seal member (113, 130) has an elongate body (113) and a gasket (130) each having a convex upper surface engageable with an inner surface of the second conduit.

2. A device (100) as claimed in claim 1 wherein the elongate body (113) of the seal member (113, 130) (130) comprises a polygonally shaped body having a convex upper surface (114) for contacting the inner face of the second conduit and which substantially conforms to the shape of the inner face of the second conduit.

3. A device (100) as claimed in claim 1 or 2 wherein the elongate body (113) of the seal member (113, 130) has a dimension that is at least a quarter of the length of the device.

4. A device (100) as claimed in claim 1, 2 or 3 wherein the elongate body (113) of the seal member (113, 130) has a cross section being a circular segment or semi elliptical.

5. A device (100) as claimed in claim 1, 2, 3 or 4 wherein the device has means for urging the seal member (113, 130) against the inner face of the second conduit.

6. A device (100) as claimed in claim 5 wherein the means for urging the seal member against the inner face of the second conduit comprises one or more displacement members (140).

7. A device (100) as claimed in claim 6 wherein the one or more displacement members comprise a telescopically extending leg (140); and /or wherein the one or more displacement members comprise a jack (140).

8. A device (100) as claimed in any one of claims 6 or 7 wherein the one or more displacement members have a foot shaped to conform to the inner face of the second conduit (10).

9. A device (100) as claimed in any one of the previous claims wherein the first and second conduits (12,10)are pipes; and/or
having at least one camera (116); and/or
connectable to a fluid supply; and/or
wherein the first and second openings permit the entry and/or exit of a pipe inspection gauge; and/or
wherein the second opening at the second end is perpendicular to the central axis and the first opening at the first end.

10. A method of accessing a feeder tube (12) extending at an angle from a header pipe (10), the method comprising:
providing a device (100) in accordance with any one or more of the previous claims;
introducing the device into the header pipe;
creating a pressure seal and mechanically coupling the device (100) with the feeder tube (12); and
introducing or utilizing service methods, such as, but not restricted to: high pressure jet blasting lances, vacuum pressure, positive fluid pressure, fluid cleaning agents, mechanical decoking pigs, inspection pigs, or optical borescopes to the feeder tube through the device.

11. The method of claim 10, further comprising actuating a jack (140) to press against the interior surface of the header pipe to create a pressure seal and mechanically couple the device (100) with the feeder tube (12).

12. The method of claim 10 or 11 further comprising optically scanning the interior surface of the header pipe (10) with a camera (116) to align the feeder tube coupler (130) with the feeder tube (12).

## Patentansprüche

1. Vorrichtung (100) zum Abgeben eines Fluids und/oder Inspizieren und/oder Zugreifen auf eine erste Leitung (12), die eine Öffnung aufweist, die mit einer größeren zweiten Leitung (10) kommuniziert, wobei die Vorrichtung einen rohrförmigen Körper (111, 112) aufweist, der eine Mittelachse definiert und eine erste Öffnung an einem ersten Ende und eine zweite Öffnung an einem zweiten Ende aufweist, wobei das zweite Ende in einem Winkel zu der Mittelachse steht, wobei die zweite Öffnung einem Dichtungselement (113, 130) zugeordnet ist, das in der Lage ist, eine Fluiddichtung derart zu erzeugen, dass Fluid an die erste Leitung (12) abgegeben werden kann, **dadurch gekennzeichnet, dass** das Dichtungselement (113, 130) einen länglichen Körper (113) und eine Dichtungsscheibe (130) aufweist, die jeweils eine konvexe obere Oberfläche aufweisen, die mit einer inneren Oberfläche der zweiten Leitung in Eingriff gebracht werden kann.

2. Vorrichtung (100) nach Anspruch 1, wobei der längliche Körper (113) des Dichtungselements (113, 130) einen polygonförmig geformten Körper, der eine konvexe obere Oberfläche (114) zum Kontaktieren der inneren Fläche der zweiten Leitung umfasst, aufweist und die im Wesentlichen der Form der inneren Fläche der zweiten Leitung entspricht.

3. Vorrichtung (100) nach Anspruch 1 oder 2, wobei der längliche Körper (113) des Dichtungselements (113, 130) eine Abmessung aufweist, die mindestens ein Viertel der Länge der Vorrichtung beträgt.

4. Vorrichtung (100) nach Anspruch 1, 2 oder 3, wobei der längliche Körper (113) des Dichtungselements (113, 130) einen Querschnitt aufweist, der ein Kreissegment oder halbelliptisch ist.

5. Vorrichtung (100) nach Anspruch 1, 2, 3 oder 4, wobei die Vorrichtung Mittel zum Drängen des Dichtungselements (113, 130) gegen die innere Fläche der zweiten Leitung aufweist.

6. Vorrichtung (100) nach Anspruch 5, wobei die Mittel zum Drängen des Dichtungselements gegen die innere Fläche der zweiten Leitung ein oder mehrere Verschiebungselemente (140) umfassen.

7. Vorrichtung (100) nach Anspruch 6, wobei das eine oder die mehreren Verschiebungselemente einen sich teleskopisch erstreckenden Schenkel (140) umfassen; und/oder wobei das eine oder die mehreren Verschiebungselemente eine Buchse (140) umfassen.

8. Vorrichtung (100) nach einem der Ansprüche 6 oder 7, wobei das eine oder die mehreren Verschiebungselemente einen Fuß aufweisen, der geformt ist, um sich an die innere Fläche der zweiten Leitung (10) anzupassen.

9. Vorrichtung (100) nach einem der vorstehenden Ansprüche, wobei die erste und die zweite Leitung (12, 10) Rohre sind; und/oder
sie mindestens eine Kamera (116) aufweist; und/oder
mit einer Fluidzufuhr verbindbar ist; und/oder
wobei die erste und die zweite Öffnung den Eingang und/oder den Ausgang eines Rohrreinigers ermöglichen; und/oder
wobei die zweite Öffnung an dem zweiten Ende senkrecht zu der Mittelachse und der ersten Öffnung an dem ersten Ende ist.

10. Verfahren zum Zugreifen auf ein Zuleitungsrohr (12), das sich in einem Winkel von einer Sammelleitung (10) erstreckt, das Verfahren umfassend:
Bereitstellen einer Vorrichtung (100) nach einem oder mehreren der vorstehenden Ansprüche;
Einführen der Vorrichtung in die Sammelleitung;
Erzeugen einer Druckdichtung und mechanisches Koppeln der Vorrichtung (100) mit dem Zuleitungsrohr (12); und
Einführen oder Verwenden von Wartungsverfahren, wie, aber nicht beschränkt auf: Hochdruckstrahlrohre, Vakuumdruck, Fluidüberdruck, Fluidreinigungsmittel, mechanische Entkokungsmolche, Inspektionsmolche oder optische Endoskope in das Zuleitungsrohr durch die Vorrichtung.

11. Verfahren nach Anspruch 10, ferner umfassend ein Betätigen einer Buchse (140), um gegen die interne Oberfläche der Sammelleitung zu drücken, um eine Druckdichtung zu erzeugen und die Vorrichtung (100) mit dem Zuleitungsrohr (12) mechanisch zu koppeln.

12. Verfahren nach Anspruch 10 oder 11, ferner umfassend das optische Abtasten der internen Oberfläche der Sammelleitung (10) mit einer Kamera (116), um die Zuleitungsrohrmuffe (130) mit dem Zuleitungsrohr (12) auszurichten.

## Revendications

1. Dispositif (100) permettant de distribuer un fluide et/ou d'inspecter et/ou d'accéder à un premier conduit (12) ayant une ouverture qui communique avec un second conduit plus grand (10), le dispositif ayant un corps tubulaire (111, 112) définissant un axe central et ayant une première ouverture au niveau d'une première extrémité et une seconde ouverture au niveau d'une seconde extrémité, la seconde extrémité faisant un angle avec l'axe central, la seconde ouverture étant associée à un élément d'étanchéité (113, 130) capable de créer un joint étanche aux fluides de telle sorte qu'un fluide peut être distribué au premier conduit (12),
**caractérisé en ce que** l'élément d'étanchéité (113, 130) a un corps allongé (113) et un joint statique (130) ayant chacun une surface supérieure convexe pouvant venir en prise avec une surface interne du second conduit.

2. Dispositif (100) selon la revendication 1 dans lequel le corps allongé (113) de l'élément d'étanchéité (113, 130) comprend un corps de forme polygonale ayant une surface supérieure convexe (114) permettant de venir en contact avec la face interne du second conduit et qui épouse sensiblement la forme de la face interne du second conduit.

3. Dispositif (100) selon la revendication 1 ou 2 dans lequel le corps allongé (113) de l'élément d'étanchéité (113, 130) a une dimension qui vaut au moins un quart de la longueur du dispositif.

4. Dispositif (100) selon la revendication 1, 2 ou 3 dans lequel le corps allongé (113) de l'élément d'étanchéité (113, 130) a une coupe transversale étant un segment circulaire ou semi-elliptique.

5. Dispositif (100) selon la revendication 1, 2, 3 ou 4 dans lequel le dispositif a un moyen permettant de pousser l'élément d'étanchéité (113, 130) contre la face interne du second conduit.

6. Dispositif (100) selon la revendication 5 dans lequel le moyen permettant de pousser l'élément d'étanchéité contre la face interne du second conduit comprend un ou plusieurs éléments de déplacement (140).

7. Dispositif (100) selon la revendication 6 dans lequel le ou les éléments de déplacement comprennent une jambe à extension télescopique (140) ; et/ou dans lequel le ou les éléments de déplacement comprennent un vérin (140).

8. Dispositif (100) selon l'une quelconque des revendications 6 ou 7 dans lequel le ou les éléments de déplacement ont un pied profilé pour épouser la forme de la face interne du second conduit (10).

9. Dispositif (100) selon l'une quelconque des revendications précédentes dans lequel les premier et second conduits (12, 10) sont des tuyaux ; et/ou
ayant au moins une caméra (116) ; et/ou
pouvant être raccordés à une alimentation en fluide ; et/ou
dans lequel les première et seconde ouvertures permettent l'entrée et/ou la sortie d'une jauge d'inspection de tuyau ; et/ou
dans lequel la seconde ouverture au niveau de la seconde extrémité est perpendiculaire à l'axe central et à la première ouverture au niveau de la première extrémité.

10. Procédé d'accès à un tube d'alimentation (12) s'étendant selon un angle à partir d'un tuyau collecteur (10), le procédé comprenant :
la fourniture d'un dispositif (100) selon l'une quelconque ou plusieurs quelconques des revendications précédentes ;
l'introduction du dispositif dans le tuyau collecteur ;
la création d'une étanchéification par pression et l'accouplement mécanique du dispositif (100) avec le tube d'alimentation (12) ;
et
l'introduction ou l'utilisation de procédés de service, tels que, mais sans s'y limiter : lances de décapage à haute pression, pression sous vide, pression positive de fluide, agents de nettoyage fluides, racleurs de décokage mécanique, racleurs d'inspection ou endoscopes optiques dans le tube d'alimentation par l'intermédiaire du dispositif.

11. Procédé selon la revendication 10, comprenant en outre l'actionnement d'un vérin (140) pour presser contre la surface intérieure du tuyau collecteur pour créer une étanchéification par pression et accoupler mécaniquement le dispositif (100) avec le tube d'alimentation (12).

12. Procédé selon la revendication 10 ou 11 comprenant en outre le balayage optique de la surface intérieure du tuyau collecteur (10) avec une caméra (116) pour aligner le coupleur de tube d'alimentation (130) avec le tube d'alimentation (12).
